# EUROPÄISCHE PATENTSCHRIFT

(11) **EP 1 491 580 B1**
(45) Veröffentlichungstag und Bekanntmachung des Hinweises auf die Patenterteilung: **26.09.2007**
(21) Anmeldenummer: 03291318.8
(22) Anmeldetag: 02.06.2003
(51) Int. Cl.: C08K 3/02, C08K 3/34, C08L 75/04, C09D 175/04, C08K 5/523, C01F 7/44, C01F 5/14, H01B 7/29

(54) **Mischung für Mäntel von optischen oder elektrischen Kabeln**
Mixture for optical or electrical cable sheaths
Composition pour gaines de câble électrique ou optique

(43) Veröffentlichungstag der Anmeldung: 29.12.2004
(73) Patentinhaber: Nexans, 75008 Paris (FR)
(72) Erfinder: Mehl, Alfred, 91166 Georgensgmünd (DE); Dinkelmeyer, Christof, 91207 Lauf (DE); Müller, Friedrich, 91207 Lauf (DE)
(74) Vertreter: Döring, Roger

(56) Entgegenhaltungen:
- EP-A- 0 791 613
- EP-A- 1 167 429
- DE-A- 19 921 472

## Beschreibung

Die Erfindung betrifft eine Mischung auf der Basis von Polyurethan für Mäntel von optischen oder elektrischen Kabeln.

Thermoplastisches Polyurethan (TPU) ist ein Werkstoff, der wegen seiner ausgezeichneten mechanischen Eigenschaften gern als Material für Mäntel von Kabeln und Leitungen, die hohen mechanischen Beanspruchungen ausgesetzt sind, verwendet wird. Thermoplastisches Polyurethan zeigt jedoch kein flammwidriges Verhalten. Im Falle eines Brandes tropft das Polyurethan vom Kabel bzw. der Leitung ab.

Durch Zusätze sogenannter Flammschutzmittel kann thermoplastisches Polyurethan in Bezug auf die Flammfestigkeit so verbessert werden, daß die damit hergestellten Kabel und Leitungen den gestellten Anforderungen genügen.

Als Flammschutzmittel für thermoplastische Polyurethane sind halogenhaltige Substanzen in Verbindung mit Antimontrioxid, aber auch halogenfreie Substanzen wie z. B. Phosphorsäureester oder eine Kombination solcher Ester mit stickstoffhaltigen Verbindungen bekannt.

Halogenhaltige Substanzen haben den Nachteil, daß im Brandfall Verbindungen entstehen, die sowohl toxisch sind als auch korrosive Gase (z. B. Salzsäure) entwickeln. Compounds, die solche Flammschutzmittel enthalten, bestehen deshalb nicht die Anforderungen bezüglich der Korrosivität von Brandgasen (IEC 754-2) und Halogenfreiheit (VDE 0472/T.815).

Die halogenfreien Flammschutzmittel entwickeln zwar im Brandfall keine korrosiven Gasen, sie haben aber den Nachteil, daß, wenn nur Phosphorsäureester eingesetzt werden, die Flammwidrigkeit nicht ausreicht, bzw. wenn zusätzlich stickstoffhaltige Substanzen verwendet werden, beträchtliche Mengen an stickstoffhaltigen, toxischen Verbindungen wie Stickstoffoxide (NOₓ) und Cyanwasserstoff (HCN Blausäure) freigesetzt werden.

Aus der EP 0 537 013 B1 sind flammwidrige Silikonzusammensetzungen für Thermoplaste bekannt geworden, bei denen den im Normalfall brennbaren Thermoplasten ein Flammschutzmittel in Pulverform zugesetzt ist, welches aus Silikonöl, Silikonharz sowie Magnesiumhydroxid jeweils in ganz bestimmtem Verhältnis zueinander besteht.

Der Thermoplast kann ein Polyethylen, Polypropylen, Polycarbonat, Polystyren, Polyurethan, Polyamid oder ein anderer Thermoplast sein.

Der Mischung können ferner Salze der phosporigen Säure sowie als Füllstoff u. a. Aluminiumoxidtrihydrat zugesetzt werden.

Der wesentliche Effekt hinsichtlich der Flammwidrigkeit wird bei der EP 0 537 013 B1 durch das Silikonöl, das in dem Silikonöl lösbare Silikonharz und das Magnesiumhydroxid erreicht.

Aus der EP 1 167 429 A1 ist eine Mischung auf der Basis von Polyurethan für Mäntel von optischen oder elektrischen Kabeln bekannt, welcher als Flammschutzmittel ein Metallhydroxid sowie zumindest ein Phosphorsäureester zugesetzt sind.

Aus der DE 199 21 472 A1 ist eine flammgeschützte Polymerzusammensetzung bekannt, welche Metallhydroxide sowie ein organisch interkaliertes Schichtsilikat enthält. Durch die Verwendung eines Flammschutzmittels aus Metallhydroxiden und einem organischen interkalierten Schichtsilikat soll auf die Verwendung von halogen- oder phosphororganischen Flammschutzmitteln verzichtet werden.

Für ein Polymergemisch aus einem Polyethylen niedriger Dichte und einem Ethylenvinylacetat-Copolymer wurde durch Zugabe des Flammschutzmittels ein LOI von 29 bis 39 erreicht.

Der vorliegenden Erfindung liegt die Aufgabe zugrunde, eine Mischung auf der Basis von thermoplastischem Polyurethan bereitzustellen, die weder halogenhaltige noch stickstoffhaltige Substanzen enthält und die Vorschriften nach IEC 754-2 und VDE 0472/T.815 erfüllt. Darüberhinaus soll die Flammwidrigkeit verbessert und das Freiwerden von toxischen Gasen weiter verringert werden.

Diese Aufgabe wird durch die Merkmale des Anspruchs 1 gelöst.

Der wesentliche Vorteil der Erfindung ist darin zu sehen, daß durch die gleichzeitige Anwesenheit von Phosphorsäureester und Bentonit die Flammwidrigkeit eines Polyurethancompounds verbessert werden kann, ohne daß der Anteil an Metallhydroxiden soweit erhöht werden muß, daß das Polyurethancompound die geforderten mechanischen Werte verfehlt.

Weitere vorteilhafte Ausgestaltungen der Erfindung sind in den Unteransprüchen erfaßt.

Die Mischung nach der Lehre der Erfindung besteht die Anforderungen bezüglich Flammwidrigkeit, Korrosivität und Halogenfreiheit und entwickelt im Brandfall von den toxischen Substanzen NOₓ und NCN nur einen Bruchteil dessen, was beim Einsatz der bekannten Produkte freigesetzt wird. Des weiteren ist die im Brandfalle freiwerdende Energie und die Menge an entstehendem Ruß deutlich niedriger als bei den bekannten Mischungen.

Die Erfindung ist anhand eines Ausführungsbeispiels näher beschrieben.

Es wurden mehrere Mischungen nach der Rezeptur in Tabelle 1 hergestellt.

**Tabelle 1**

| **Beispiel** | **1** | **2** | **3** | **4** | **5** |
|---|---|---|---|---|---|
| Polyetherurethan | 100 | 100 | 100 | 100 | 100 |
| Phosphorsäureester | 19 | 19 | 19 | 14 | - |
| Aluminiumhydroxid | 67 | 67 | 50 | 50 | 89 |
| Schichtsilikat | - | 10 | 10 | 10 | 11 |
| Heat release (peak) [kW/m²] | 505 | 214 | 242 | 316 | 280 |
| Time (peak) [sec] | 155 | 270 | 265 | 235 | 110 |
| Festigkeit [MPa] | 25 | 24 | 26 | 27 | 10 |
| Dehnung [%] | 560 | 550 | 540 | 560 | 200 |

Mischung 1 ist nach den Vorgaben des Beispiels aus der EP 1 167 429 hergestellt.

Mischung 5 entspricht Beispiel 5 aus der DE 199 21 472. Aus den Mischungen 3 und 7 der DE 199 21 472 konnten wegen des höheren Anteils an Aluminiumhydroxid keine für die Prüfung geeigneten Compounds mit Polyetherurethan hergestellt werden.

Die Beispiele 2, 3 und 4 sind Mischungen nach der Lehre der Erfindung.

Die Compounds 1-5 wurden in einem Innen-Kneter hergestellt und aus ihnen in einer beheizbaren Presse Platten hergestellt. Die Platten für die Cone-Calorimeter-Messungen hatten eine Dicke von ca. 3 mm, die für die Prüfung von Festigkeit und Dehnung ca. 0,8 mm. Die Cone-Calorimeter-Messungen wurden mit einer Heizleistung von 50 kW/m² durchgeführt.

Die Beispiele zeigen, daß
- durch Zugabe eines Schichtsilikates das Brandverhalten eines TPU-Compounds, der Metallhydroxid und eine Phosphorverbindung enthält, wesentlich verbessert werden kann.
- die Anwesenheit einer Phosporverbindung notwendig ist, da durch sie eine deutliche Reduzierung des Anteils an Metallhydroxid möglich ist.

Besonders bei Polyurethan mit seinen hohen mechanischen Eigenschaften ist es wichtig, den Anteil an Additiven niedrig zu halten, um nicht zuviel an diesen Eigenschaften einzubüßen.

Werden TPU-Compounds für Kabel verwendet, so gibt die Norm VDE 0282 Teil 10 eine Mindestfestigkeit von 25 Mpa und eine Reißdehnung von mindestens 300 % vor. Diese Werte sind mit dem Compound nach Beispiel 5 nicht zu erreichen.

Hinzu kommt noch, daß durch den höheren Anteil an Metallhydroxid der Compound steifer wird und nicht mehr für flexible Kabel verwendet werden kann.

Der in den Beispielen 2 bis 4 vorhandene Phosphorsäureester bewirkt, daß die Flexibilität weitgehend erhalten bleibt.

Die Ergebnisse sind in den Diagrammen 1 bis 3 dokumentiert.

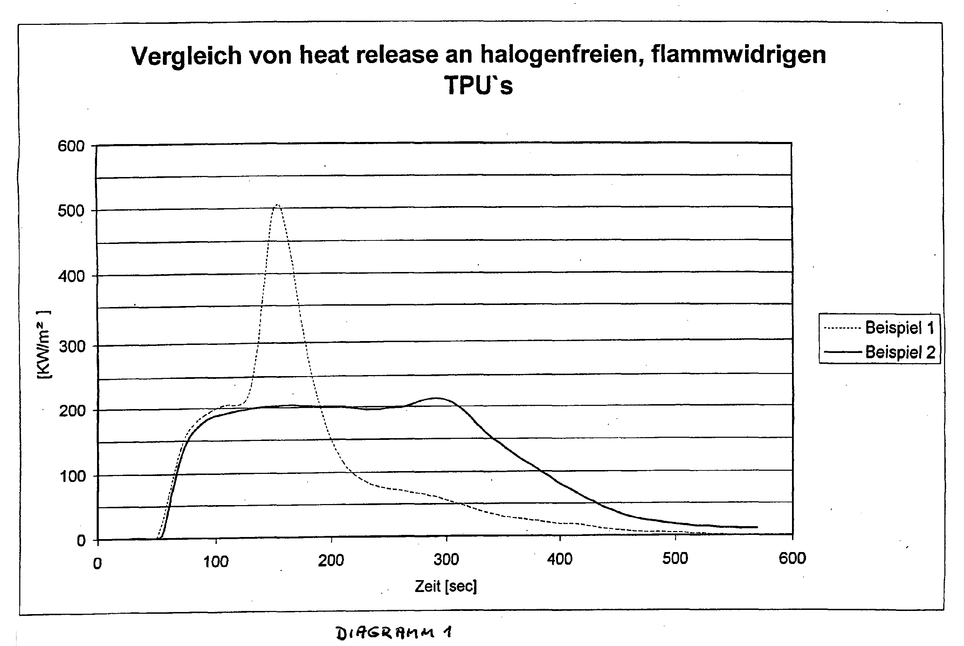

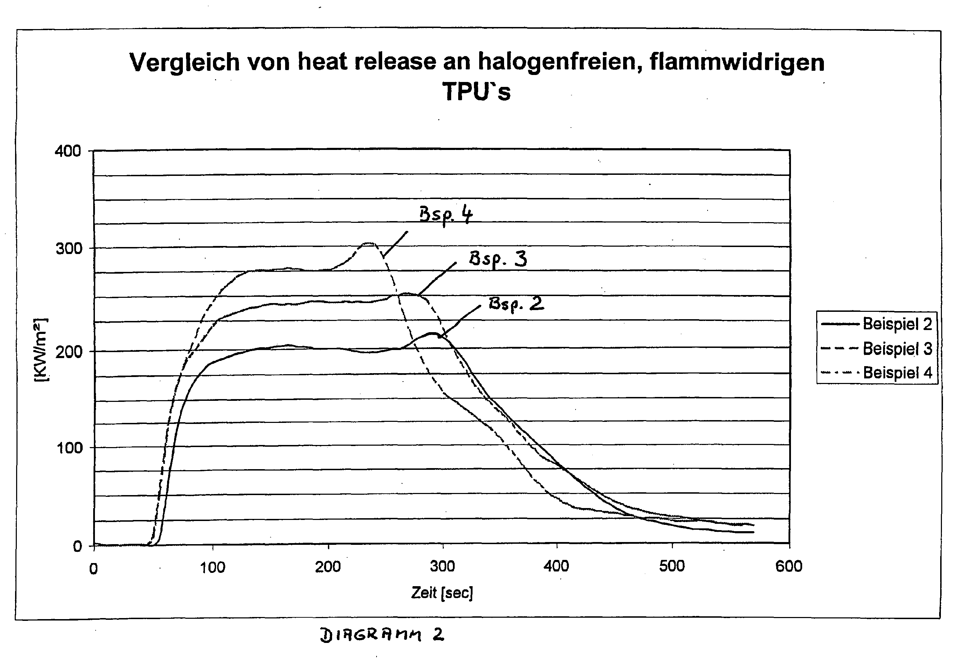

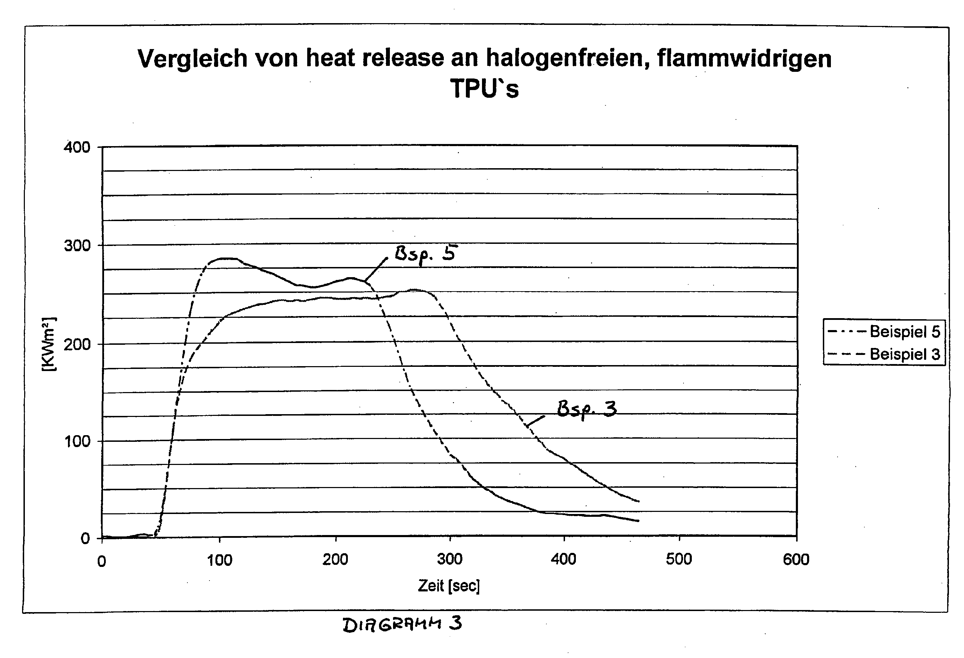

## Patentansprüche

1. Mischung auf der Basis von Polyetherurethan für Mäntel von optischen oder elektrischen Kabeln mit Zusätzen von Flammschutzmitteln bestehend aus
30 bis 70 Teilen Polyetherurethan
25 bis 60 Teilen Aluminiumhydroxid bzw. Aluminiumoxidtrihydrat
15 bis 25 Teilen Phosphorsäureester
5 bis 15 Teilen Bentonit
mit einer Mindestfestigkeit von 25 Mpa und einer Reißdehnung von mindestens 300%.

2. Mischung nach Anspruch 1, **dadurch gekennzeichnet, daß** der Phosphorsäureester ein schwer flüchtiger Phosphorsäureester ist.

3. Mischung nach Anspruch 1 oder 2, **dadurch gekennzeichnet, daß** als Phosphorsäureester Resorcinol- bis -diphenylphosphat verwendet wird.

4. Elektrisches Kabel oder elektrische Leitung mit einem Mantel aus einer Mischung nach einem der Ansprüche 1 bis 3, **dadurch gekennzeichnet, daß** der Mantel vernetzt ist, vorzugsweise durch Strahlenvernetzung.

## Claims

1. Mixture based on polyetherurethane for sheaths of optical or electrical cables with additions of flame retardants composed of
from 30 to 70 parts of polyetherurethane
from 25 to 60 parts of aluminium hydroxide or aluminium oxide trihydrate
from 15 to 25 parts of phosphoric ester
from 5 to 15 parts of bentonite
with a minimum strength of 25 MPa and a tensile strain at break of at least 300%.

2. Mixture according to Claim 1, **characterized in that** the phosphoric ester is a low-volatility phosphoric ester.

3. Mixture according to Claim 1 or 2, **characterized in that** the phosphoric ester used comprises resorcinol bis(diphenyl phosphate).

4. Electrical cable or electrical line with a sheath composed of a mixture according to any of Claims 1 to 3, **characterized in that** the sheath has been crosslinked, preferably via radiation crosslinking.

## Revendications

1. Mélange à base de poly(éther-uréthane) pour gaines de câbles optiques ou électriques, auquel on a ajouté des agents d'ignifugation constitués de :
- 30 à 70 parties de poly(éther-uréthane),
- 25 à 60 parties d'hydroxyde d'aluminium ou d'oxyde d'aluminium trihydraté,
- 15 à 25 parties d'ester d'acide phosphorique et
- 5 à 15 parties de bentonite
dont la résistance mécanique minimale est de 25 MPa et l'allongement à la rupture d'au moins 300 %.

2. Mélange selon la revendication 1, **caractérisé en ce que** l'ester d'acide phosphorique est un ester peu volatil d'acide phosphorique.

3. Mélange selon les revendications 1 ou 2, **caractérisé en ce que** l'on utilise comme ester d'acide phosphorique le phosphate de résorcinol-bis-diphényle.

4. Câble électrique ou conducteur électrique doté d'une gaine constituée d'un mélange selon l'une des revendications 1 à 3, **caractérisé en ce que** la gaine est réticulée, de préférence par réticulation par irradiation.
